# EUROPEAN PATENT SPECIFICATION

(11) **EP 4 305 466 B1**
(45) Date of publication and mention of the grant of the patent: **18.02.2026**
(21) Application number: 22711311.5
(22) Date of filing: 04.03.2022
(51) Int. Cl.: G01T 1/164, G01T 1/20

(54) **SCINTIGRAPHIC DETECTION DEVICE WITH A HIGH DEGREE OF COMPACTNESS AND SIMPLIFIED ELECTRONICS**
SZINTIGRAPHISCHE DETEKTIONSVORRICHTUNG MIT HOHER KOMPAKTHEIT UND VEREINFACHTER ELEKTRONIK
DISPOSITIF DE DÉTECTION SCINTIGRAPHIQUE À HAUT DEGRÉ DE COMPACITÉ ET ÉLECTRONIQUE SIMPLIFIÉE

(30) Priority: 10.03.2021 IT 202100005549
(43) Date of publication of application: 17.01.2024
(73) Proprietor: Consiglio Nazionale delle Ricerche, 00185 Roma (IT)
(72) Inventor: SOLURI, Alessandro, 00186 Roma (IT); MASSARI, Roberto, 00048 Nettuno (RM) (IT)
(74) Representative: Bellomia, Paolo
(86) International application number: PCT/IB2022/051917
(87) International publication number: WO 2022/189918

(56) References cited:
- WO-A1-2011/074022
- WO-A1-2014/097546
- WO-A1-2018/050496
- WO-A2-2020/075106
- CN-A- 105 395 208
- US-A1- 2015 212 216
- US-A1- 2017 276 807
- US-A1- 2019 250 285
- OKAZAKI KEITA ET AL: "Improving the spatial resolution of a pixelated LaBr3(Ce) scintillator coupled with a multi-pixel photon counter array for boron neutron capture therapy", NUCLEAR INSTRUMENTS & METHODS IN PHYSICS RESEARCH. SECTION A, ELSEVIER BV * NORTH-HOLLAND, NL, vol. 992, 7 January 2021 (2021-01-07), XP086484734, ISSN: 0168-9002, [retrieved on 20210107], DOI: 10.1016/J.NIMA.2021.165026
- SEIICHI YAMAMOTO ET AL: "Development of a high-resolution Si-PM-based gamma camera system;A high-resolution Si-PM-based gamma camera system", PHYSICS IN MEDICINE AND BIOLOGY, INSTITUTE OF PHYSICS PUBLISHING, BRISTOL GB, vol. 56, no. 23, 11 November 2011 (2011-11-11), pages 7555 - 7567, XP020214026, ISSN: 0031-9155, DOI: 10.1088/0031-9155/56/23/014
- MARCO CORTESI ET AL: "Development of a Parallel-Plate Avalanche Counter with Optical Readout (O-PPAC)", ARXIV.ORG, CORNELL UNIVERSITY LIBRARY, 201 OLIN LIBRARY CORNELL UNIVERSITY ITHACA, NY 14853, 17 August 2018 (2018-08-17), XP081099497, DOI: 10.1088/1748-0221/13/10/P10006

## Description

This invention relates to a scintigraphic detection device with a high degree of compactness and simplified electronics, in particular modular, with a high spatial resolution and able to form investigation areas of various shapes and sizes and therefore able to be used in different types of applications.

In general, the functional imaging systems used (SPECT and PET) are used in Nuclear Medicine as diagnostic devices and, in some cases, as localisation systems in the operating room and robotic surgery. The use of these devices may also be applied in the scintigraphic analysis of organs of small animals, so as to trial new radio-marked antibodies, which are specific for certain diseases. Moreover, there application can be planned in safety sectors (airports) or for industrial diagnostics.

The main use of these devices relates to the localisation of tumoral lesions, especially in those techniques which require an adequate spatial precision such as biopsies (prostate and breast) or in radio guided surgical operations or as a monitoring system in radiometabolic therapy, radioguided robot-assisted surgery and small animal imaging applications.

Currently, the devices such as traditional gamma chambers use a large number of phototubes connected together which are designed to read the charge produced in the interaction of the scintillation crystals with the photons coming from the emission source. In general, each phototube records a collected charge value and, consequently, this information is useful for determining the position of the interacting events (photon) in such a way as to form the scintigraphic image.

Over the years several solutions have been introduced linked to the introduction of particular position-sensitive phototubes (PSPMT, "Position Sensitive Photo Multiplier Tube"), that is to say, which is able to calculate the position of the event directly on the same phototube, as an alternative to the simultaneous reading of the charge collected on the various phototubes.

The scintigraphic devices with high spatial resolution may use position-sensitive phototubes of the latest generation, that is to say, devices in which the number and size of the collection anodes may influence the intrinsic precision of the device in terms of spatial resolution which can be achieved. These devices highlight a high resolution power in the more central zones of the phototubes whilst this feature is not maintained close to the edges, due to a smaller collection of light due to the lack of sufficient anodes to complete the entire process for collecting the charge close to these zones. The physical dimensions of the device in general do not coincide with the collection area, therefore close to the edge zones the charge collection is incomplete caused by the loss of a portion of light due to the absence of more external collection anodes. The use of diffuser means (glass, quartz, etc.) is suitable for increasing the widening of the light which is produced in the crystal, since this method is effective in coupling several phototubes alongside each other, in order to better distribute it on several contiguous anodes, belonging to various phototubes and consequently perform the calculation of the charge barycentre to determine the position of the event.

The limitation of this technique consists in the actual dimensions of the phototube, which do not exactly correspond to the anode area, the latter being slightly smaller. This results in the presence of a dead zone of a few millimetres on each side when several phototubes are placed alongside each other and, consequently, the need to introduce the necessary measures which, in fact, do not allow satisfactory results to be obtained.

The considerations described up to complicate the development of extended areas by means of a high resolution detection system based on PSPMT phototubes without intervening with processes which are able to provide good results even if affected by limitations regarding the spatial resolution values which can be obtained.

Moreover, the systems using PSPMT phototubes are penalised by the overall dimensions of the latter which, in the case of very large areas, require excessive spaces for their housing (or in any case incompatible with the modern miniaturisation requirements).

As an alternative to the use of PSMPT, recent improvements have been obtained on optoelectronic devices such as APDs (Avalanche Photo Diode) or other types such as SiPMs (Silicon PhotoMultiplier) and similar devices known as MPPC (Multi-Pixel Photon Counter). Compared with traditional PMT phototubes, they have numerous advantages such as, for example, the low operating voltage (from 30 to 80 V depending on the model and the manufacturer) and the insensitiveness to the magnetic field having been tested up to 4 T without any degradation of performance. Their main application limit is the statistical thermal noise (or "dark current", since it is also present in conditions of non-illumination of the SiPM), which is almost proportional to the active area. This currently places a clear limitation to the production of a single large device which uses a large number of SiPM (or MPPC modules) to create large detection areas.

In effect, in order to obtain an excellent spatial resolution it is necessary to use a large number of SiPM or MPPC elements to cover entirely the detection area; however, this results in an increase in the computational task of analysing the readings in the case of reading the individual elements.

Moreover, in the case of "mediated" readings, that is to say, readings of signals common to a certain number of SiPM or MPPC elements, there is the disadvantage of also adding up the dark currents which, upon reaching a certain number of elements (in the order of several hundreds), determine an overall reading comparable to the reading corresponding to a scintigraphic event (photon), making it impossible to distinguish between a scintigraphic event and a simple background noise amplified by the joining of a plurality of SiPM or MPPC elements connected in series. WO 2014/097546 A1 discloses an imaging device which includes a collimator, a scintillator plate configured to convert incident radiation into scintillation light and an imaging element configured to convert the scintillation light to an electric signal.

In consideration of the above-mentioned prior art, the aim of the invention is to provide a scintigraphic detection device which is structurally simple and with a particular simplification of the electronic part.

Another aim of the invention is to provide a scintigraphic detection device which is physically compact, and hence with small dimensions. The invention is set out in the appended set of claims.

Further features and advantages of the invention are more apparent in the nonlimiting description which follows of a non-exclusive embodiment of a scintigraphic detection device according to the invention.

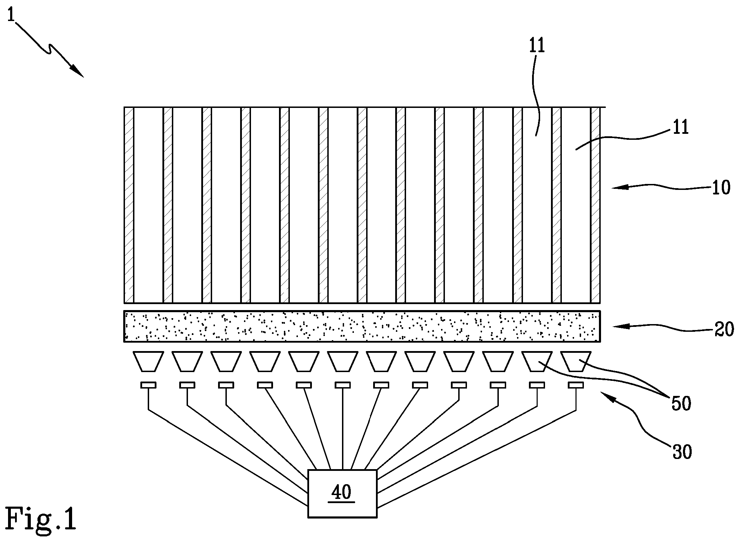

The description is set out below with reference to Figure 1 provided solely for purposes of illustration without restricting the scope of the invention and which shows an embodiment of a scintigraphic detection device made according to the invention.

With reference to Figure 1, the numeral 1 schematically denotes a scintigraphic detection device according to the invention.

The device basically comprises:
- a collimator 10;
- a scintillation structure 20 configured to convert a radiation into photons, associated with the collimator 10 and positioned below it to define a detection area;
- an optoelectronic unit 30 associated with the scintillation structure 20 for converting photons into electrical signals;
- an electronic processing unit 40 connected to the optoelectronic unit 30 for processing the electrical signals generated by the optoelectronic unit 30.

With reference to the collimator 10, it is made of a material with a high atomic number and has a plurality of collimation channels 11 distributed on the above-mentioned detection area (for example, according to a two-dimensional distribution) for absorbing the lateral radiation directed towards the scintillation structure 20 and having an angle of incidence greater than a predetermined value.

The collimator 10 may be made in a traditional manner and will not be described further in the prior art aspects.

With reference to the scintillation structure 20, it has a surface extension such as to define an overall detection area, which is preferably substantially equal to the area of extension of the collimator 10.

The scintillation structure 20 is configured to receive a radiation passing through the collimator 10 and to convert the radiation into photons.

According to an embodiment, illustrated in Figure 1, the scintillation structure 20 comprises a single scintillation plate which extends over the entire overall detection area.

According to a variant embodiment not illustrated, the scintillation structure 20 comprises two or more scintillation plates positioned side by side (laterally) linearly or in a two-dimensional configuration and each associated with a plurality of collimation channels, for example to obtain a modular configuration provided with a number of scintillation plates as a function of the extension of the overall detection area.

According to a further variant embodiment not illustrated, the scintillation structure 20 comprises a matrix of scintillation crystals defining the overall detection area and each associated with a single respective collimation channel 11. For this reason, each scintillation crystal is associated with a single respective collimation channel 11, and each collimation channel 11 is associated with a single respective scintillation crystal, defining a biunique correspondence.

The scintillation plate (or the scintillation crystals in the case of production using individual crystals) is made in known manner, for example using CsI(Tl) or NaI(Tl). Moreover, the radiation is of the gamma type.

With reference to the optoelectronic unit 30, it is positioned below the scintillation unit 20, in other words on the opposite side relative to the collimator 11. This invention relates mainly to the structure of the optoelectronic unit 30.

In particular, according to the invention, the optoelectronic unit 30 comprises a plurality of optoelectronic conversion elements 31 each associated with a respective collimation channel 11 and preferably having a surface lower than the transversal surface of the respective collimation channel 11.

For this reason, each optoelectronic conversion element 31 is associated with a single respective collimation channel 11 (and with a single scintillation crystal, where present), and each collimation channel 11 is associated with a single respective optoelectronic conversion element 31, defining a biunique correspondence.

Advantageously, each optoelectronic conversion element 31 comprises a single "Multi Pixel Photon Counter" (MPPC) or "Silicon PhotoMultiplier" (SiPM) element which is preferably directly connected to the electronic processing unit 40. In this way, therefore, each collimation channel 11 is associated with a single SiPC or MPPC element 31.

Preferably, the SiPM or MPPC elements 31 are connected to the electronic processing unit 40 independently of each other. In other words, each SiPM or MPPC element 31 is connected to the electronic processing unit 40 without correlation to the other SiPM or MPPC elements 31 in such a way that the electronic processing unit 40 can receive the electrical signals from each SiPM or MPPC element 31 and process them without interference by the other SiPM or MPPC elements 31.

Preferably, each SiPM or MPPC element 31 is positioned in a centred position relative to the corresponding collimation channel 11.

Preferably, each SiPM or MPPC element 31 has a surface extension of between 1 mm² and 6 mm² and/or each SiPM or MPPC elements 31 has at least a linear dimension less than or equal to half the corresponding linear dimension of the respective collimation channel 11, (for example the width).

Advantageously, the device 1 also comprises, between each SiPM or MPPC element 31 and the scintillation structure 20, an optical guide 50 configured for conveying and for converging the photons generated by a corresponding portion of the scintillation structure towards the SiPM or MPPC element 31. In this way, the radiation passing through a single collimation channel 11 is conveyed in a convergent fashion towards the single and respective SiPM or MPPC element 31, its dimension which is smaller than the collimation channel 11 not adversely affecting the light reading.

Preferably, the optical guides 50 associated with the collimation channels 11 are aligned in a shared plane defining a conveying stage of the photons positioned below the scintillation structure 20 and in particular interposed between the scintillation structure 20 and the optoelectronic unit 30.

According to an embodiment, the optical guides 50 are independent of each other and applied individually to the respective SiPM or MPPC element 31 or to the scintillation structure 20 (therefore, to the respective crystal or to the scintillation plate).

According to a different embodiment, the optical guides 50 are mounted on a shared support which is fixed to the frame of the device 1.

The present invention achieves the preset aims, overcoming the disadvantages of the prior art.

The making of the optoelectronic unit using individual SiPM or MPPC elements improves the overall compactness of the device, also allowing a reliable measurement thanks to the independence of the individual MPPC or SiPM elements, which reduces the incidence of dark currents, the extent of which is certainly negligible compared with the photon event measured.

Moreover, the device is simplified structurally and therefore inexpensive.

## Claims

1. A scintigraphic detection device, comprising:
- a scintillation structure (20) defining an overall detection area and designed to receive a radiation and to convert said radiation into photons;
- a collimator (10) made of a material with a high atomic number and having a plurality of collimation channels (11) distributed over said detection area, said collimator (10) being associated with the scintillation structure (20) for absorbing a lateral radiation directed towards the detection structure (20) and having an angle of incidence greater than a predetermined value;
- an optoelectronic unit (30) associated with the scintillation structure (20) for converting photons into electrical signals;
- an electronic processing unit (40) connected to the optoelectronic unit (30) for processing the electrical signals generated by the optoelectronic unit (30);
**characterised in that**
the optoelectronic unit (30) comprises a plurality of optoelectronic conversion elements (31) each associated with a respective collimation channel (11) and having a surface lower than the transversal surface of the respective collimation channel, each optoelectronic conversion element (31) comprising a single SiPM or MPPC element (31),
**and in that**
it comprises, between each optoelectronic conversion element (31) and the scintillation structure (20), an optical guide (50) configured for conveying and for converging the photons generated by a corresponding portion of the scintillation structure towards the optoelectronic conversion element (31).

2. The device according to claim 1, wherein the scintillation structure (20) comprises a scintillation plate associated with a plurality of said collimation channels (11), preferably a single scintillation plate which extends on said overall detection area.

3. The device according to claim 1, wherein said scintillation structure (20) comprises a matrix of scintillation crystals defining said detection area.

4. The device according to any one of the preceding claims, wherein each SiPM or MPPC element (31) is positioned in a centred position relative to the corresponding collimation channel (11).

5. The device according to any one of the preceding claims, wherein each of said SiPM or MPPC elements (31) has a surface extension of between 1 mm² and 6 mm² and/or wherein each of said SiPM or MPPC elements (31) has at least a linear dimension less than or equal to half the corresponding linear dimension of the respective collimation channel (31).

6. The device according to any one of the preceding claims, wherein said SiPM or MPPC elements (31) are connected to the electronic processing unit (40) independently of each other.

7. The device according to any one of the preceding claims, wherein the optical guides (50) are independent of each other and applied individually to the respective SiPM or MPPC element (31) or to the scintillation structure (20).

8. The device according to any one of claims 1 to 6, wherein the optical guides (50) are mounted on a shared support which is fixed to a frame of the device (1).

9. The device according to any one of the preceding claims, wherein each optoelectronic conversion element (31) is associated with a single respective collimation channel (11) and each collimation channel (11) is associated with a single respective optoelectronic conversion element (31).

## Patentansprüche

1. Szintigraphische Detektionsvorrichtung, umfassend:
- eine Szintillationsstruktur (20), die einen gesamten Detektionsbereich definiert und dazu ausgestaltet ist, eine Strahlung zu empfangen und die Strahlung in Photonen umzuwandeln;
- ein Kollimator (10) aus einem Material mit hoher Ordnungszahl, der eine Vielzahl von über den Detektionsbereich verteilten Kollimationskanälen (11) aufweist, wobei der Kollimator (10) mit der Szintillationsstruktur (20) assoziiert ist, um eine seitliche Strahlung zu absorbieren, die auf die Detektionsstruktur (20) gerichtet ist und einen Einfallswinkel aufweist, der größer als ein vorbestimmter Wert ist;
- eine mit der Szintillationsstruktur (20) assoziierte optoelektronische Einheit (30) zum Umwandeln von Photonen in elektrische Signale;
- eine elektronische Verarbeitungseinheit (40), die mit der optoelektronischen Einheit (30) verbunden ist, um die von der optoelektronischen Einheit (30) erzeugten elektrischen Signale zu verarbeiten;
**dadurch gekennzeichnet, dass**
die optoelektronische Einheit (30) eine Vielzahl von optoelektronischen Umwandlungselementen (31) umfasst, die jeweils mit einem jeweiligen Kollimationskanal (11) assoziiert sind und eine Oberfläche aufweisen, die niedriger als die transversale Oberfläche des jeweiligen Kollimationskanals ist, wobei ein jedes optoelektronische Umwandlungselement (31) ein einzelnes SiPM- oder MPPC-Element (31) umfasst,
und dadurch, dass
sie zwischen einem jeden optoelektronischen Umwandlungselement (31) und der Szintillationsstruktur (20) einen Lichtleiter (50) umfasst, der zum Transportieren und zum Konvergieren der von einem entsprechenden Abschnitt der Szintillationsstruktur erzeugten Photonen in Richtung des optoelektronischen Umwandlungselements (31) ausgelegt ist.

2. Vorrichtung nach Anspruch 1, wobei die Szintillationsstruktur (20) eine Szintillationsplatte umfasst, die mit einer Vielzahl der Kollimationskanäle (11) assoziiert ist, vorzugsweise eine einzelne Szintillationsplatte, die sich auf dem gesamten Detektionsbereich erstreckt.

3. Vorrichtung nach Anspruch 1, wobei die Szintillationsstruktur (20) eine Matrix von Szintillationskristallen umfasst, die den Detektionsbereich definieren.

4. Vorrichtung nach einem der vorhergehenden Ansprüche, wobei ein jedes SiPM- oder MPPC-Element (31) in einer zentrierten Position relativ zu dem entsprechenden Kollimationskanal (11) positioniert ist.

5. Vorrichtung nach einem der vorhergehenden Ansprüche, wobei ein jedes der SiPM- oder MPPC-Elemente (31) eine Oberflächenausdehnung zwischen 1 mm² und 6 mm² aufweist und/oder wobei ein jedes der SiPM- oder MPPC-Elemente (31) mindestens eine lineare Abmessung aufweist, die kleiner oder gleich der Hälfte der entsprechenden linearen Abmessung des jeweiligen Kollimationskanals (31) ist.

6. Vorrichtung nach einem der vorhergehenden Ansprüche, wobei die SiPM- oder MPPC-Elemente (31) unabhängig voneinander mit der elektronischen Verarbeitungseinheit (40) verbunden sind.

7. Vorrichtung nach einem der vorhergehenden Ansprüche, wobei die Lichtleiter (50) unabhängig voneinander sind und einzeln auf das jeweilige SiPM- oder MPPC-Element (31) oder auf die Szintillationsstruktur (20) aufgebracht sind.

8. Vorrichtung nach einem der Ansprüche 1 bis 6, wobei die Lichtleiter (50) auf einem gemeinsamen Träger montiert sind, der an einem Rahmen der Vorrichtung (1) befestigt ist.

9. Vorrichtung nach einem der vorhergehenden Ansprüche, wobei ein jedes optoelektronische Umwandlungselement (31) mit einem einzelnen jeweiligen Kollimationskanal (11) assoziiert ist und ein jeder Kollimationskanal (11) mit einem einzelnen jeweiligen optoelektronischen Umwandlungselement (31) assoziiert ist.

## Revendications

1. Dispositif de détection scintigraphique, comprenant :
- une structure de scintillation (20) définissant une zone de détection globale et conçue pour recevoir un rayonnement et convertir ledit rayonnement en photons ;
- un collimateur (10) réalisé en un matériau à numéro atomique élevé et comportant une pluralité de canaux de collimation (11) répartis sur ladite zone de détection, ledit collimateur (10) étant associé à la structure de scintillation (20) pour absorber un rayonnement latéral dirigé vers la structure de détection (20) et ayant un angle d'incidence supérieur à une valeur prédéterminée ;
- une unité optoélectronique (30) associée à la structure de scintillation (20) pour convertir les photons en signaux électriques ;
- une unité de traitement électronique (40) reliée à l'unité optoélectronique (30) pour traiter les signaux électriques générés par l'unité optoélectronique (30) ;
**caractérisé en ce que**
l'unité optoélectronique (30) comprend une pluralité d'éléments de conversion optoélectroniques (31) associés chacun à un canal de collimation (11) respectif et ayant une surface inférieure à la surface transversale du canal de collimation respectif, chaque élément de conversion optoélectronique (31) comprenant un seul élément SiPM ou MPPC (31),
et **en ce que**
il comprend, entre chaque élément de conversion optoélectronique (31) et la structure de scintillation (20), un guide optique (50) configuré pour acheminer et faire converger les photons générés par une partie correspondante de la structure de scintillation vers l'élément de conversion optoélectronique (31).

2. Dispositif selon la revendication 1, dans lequel la structure de scintillation (20) comprend une plaque de scintillation associée à une pluralité desdits canaux de collimation (11), de préférence une seule plaque de scintillation qui s'étend sur ladite zone de détection globale.

3. Dispositif selon la revendication 1, dans lequel ladite structure de scintillation (20) comprend une matrice de cristaux de scintillation définissant ladite zone de détection.

4. Dispositif selon l'une quelconque des revendications précédentes, dans lequel chaque élément SiPM ou MPPC (31) est positionné dans une position centrée par rapport au canal de collimation (11) correspondant.

5. Dispositif selon l'une quelconque des revendications précédentes, dans lequel chacun desdits éléments SiPM ou MPPC (31) possède une extension de surface comprise entre 1 et 6 mm² et/ou dans lequel chacun desdits éléments SiPM ou MPPC (31) a au moins une dimension linéaire inférieure ou égale à la moitié de la dimension linéaire correspondante du canal de collimation (31) respectif.

6. Dispositif selon l'une quelconque des revendications précédentes, dans lequel lesdits éléments SiPM ou MPPC (31) sont reliés à l'unité de traitement électronique (40) indépendamment les uns des autres.

7. Dispositif selon l'une quelconque des revendications précédentes, dans lequel les guides optiques (50) sont indépendants les uns des autres et appliqués individuellement à l'élément SiPM ou MPPC (31) respectif ou à la structure de scintillation (20).

8. Dispositif selon l'une quelconque des revendications 1 à 6, dans lequel les guides optiques (50) sont montés sur un support commun qui est fixé à un châssis du dispositif (1).

9. Dispositif selon l'une quelconque des revendications précédentes, dans lequel chaque élément de conversion optoélectronique (31) est associé à un seul canal de collimation (11) respectif et chaque canal de collimation (11) est associé à un seul élément de conversion optoélectronique (31) respectif.
